# EUROPÄISCHE PATENTSCHRIFT

(11) **EP 2 040 556 B1**
(45) Veröffentlichungstag und Bekanntmachung des Hinweises auf die Patenterteilung: **12.01.2011**
(21) Anmeldenummer: 07787252.1
(22) Anmeldetag: 09.07.2007
(51) Int. Cl.: A22C 11/02

(54) **FÜLLVORRICHTUNG, MASCHINE SOWIE VERFAHREN ZUM FÜLLEN VON HÜLLEN, INSBESONDERE WURSTDÄRMEN**
FILLING APPARATUS, MACHINE AND METHOD FOR FILLING OF CASINGS, PARTICULARLY SAUSAGE CASINGS
APPAREIL DE REMPLISSAGE, MACHINE ET PROCÉDÉ POUR REMPLIR DES ENVELOPPES, EN PARTICULIER DES BOYAUX DE SAUCISSES

(30) Priorität: 07.07.2006 DE 202006010597 U
(43) Veröffentlichungstag der Anmeldung: 01.04.2009
(73) Patentinhaber: VEMAG Maschinenbau GmbH, 27283 Verden/Aller (DE)
(72) Erfinder: HILLER, Klaus, 27313 Dörverden (DE)
(74) Vertreter: Andres, Mark
(86) Internationale Anmeldenummer: PCT/EP2007/056976
(87) Internationale Veröffentlichungsnummer: WO 2008/003791

(56) Entgegenhaltungen:
- EP-A- 1 260 143
- EP-A2- 0 399 582
- CH-A- 393 123
- DE-C- 190 568
- DE-U1- 29 718 684
- US-A- 6 050 888

## Beschreibung

Die vorliegende Erfindung betrifft eine Füllvorrichtung für eine Maschine zum Füllen von Hüllen, insbesondere Wurstdärmen, mit einem um seine Längsachse dreh- und antreibbaren Füllrohr, auf das ein durch das Füllrohr befüllbarer Darm aufziehbar ist und mit einer am offenen Ende des Füllrohrs in einem Tragrahmen angeordneten Darmbremse.

Die Erfindung betrifft des weiteren eine Maschine zum Füllen von Hüllen wie Wurstdärmen, mit einem Vorratsbehälter für pastöse Massen, insbesondere Wurstbrät, einer mit dem Vorratsbehälter verbundenen Fördereinrichtung zum Fördern von Wurstbrät und mit einer Füllvorrichtung, die ein um seine Längsachse dreh- und antreibbares Füllrohr, auf das ein durch das Füllrohr befüllbarer Darm aufziehbar ist, und eine am offenen Ende des Füllrohrs angeordnete Darmbremse aufweist.

Die Erfindung betrifft darüber hinaus ein Verfahren zum Füllen von Hüllen, insbesondere Wurst-Därmen, bei dem ein Darm auf ein Füllrohr aufgezogen wird, und mittels einer aus dem Füllrohr ausströmenden pastösen Masse, insbesondere Wurstbrät, gefüllt und von dem Füllrohr durch den Druck der Masse abgezogen wird, und bei dem zur Portionierung des Darms durch Rotation des Füllrohres eine Abdrehstelle erzeugt wird, wobei der Darm mit einem drehbaren Bremsring einer Darmbremse zusammenwirkt.

Füllvorrichtungen, Füllmaschinen sowie Füllverfahren von Hüllen dieser Art sind bekannt. Füllvorrichtungen sind Bestandteil einer Füllmaschine, mit deren Hilfe pastöse Massen, insbesondere Wurstbrät, in Hüllen wie Därme aus Kunststoff oder Naturdarm eingefüllt und die Hüllen derart abgedreht werden können, dass separierbare gefüllte Abschnitte möglichst gleicher Länge und gleichen Gewichts entstehen, die voneinander getrennt werden können, um einzelne Würstchen zu erhalten.

Vor dem Füllen des Darms wird dieser auf das Füllrohr aufgezogen. Der Darm kann unterschiedliche Durchmesser, auch Kaliber genannt, besitzen. Mittels einer Fördereinrichtung, wie z.B. einer Pumpe, insbesondere einer Förderkurve oder einer Flügelzelle, wird der Wurstbrät durch das Füllrohr in den Darm gepresst, der an einem Ende abgezogen wird. Ist eine einstellbare Menge von Wurstbrät in den Darm eingefüllt worden, wird zum Abdrehen des Darms das um seine Längsachse drehbar gelagerte Füllrohr mit Hilfe eines Antriebs gedreht, was bewirkt, dass sich der auf das Füllrohr aufgezogene Darm sich ebenfalls mitdreht. Auf diese Weise wird der Darm an einer Einschnür- oder Abdrehstelle abgedreht. Nach dem Abdrehen wird die Drehung des Füllrohres unterbrochen und eine wählbare Menge an Wurstbrät erneut durch das Füllrohr in den Darm gepresst und dieser gleichzeitig abgezogen. Anschließend wird der Abdrehvorgang erneut gestartet. Auf diese Weise können einzelne, portionierte Würste hergestellt werden.

Bei einer aus Patentschrift EP 1048213 bekannten Füllvorrichtung wird der Darm mittels einer im Wesentlichen formschlüssig in das Füllrohr eingreifenden Darmmitnahmeeinrichtung zusammen mit dem Füllrohr in Drehung versetzt. Die Abdrehung geschieht dadurch, dass der Darm von einer vor dem offenen Ende des Füllrohrs angeordneten, nicht rotierenden Darmbremse festgehalten wird. Um ein sicheres Mitdrehen des Darms mit dem Füllrohr über seine gesamte Länge gewährleisten zu können, ist die Darmmitnahmeeinrichtung entlang des Füllrohrs verschiebbar. Um diese Verschiebbarkeit ermöglichen zu können, ist eine Längsnut entlang des Füllrohrs vorgesehen, in welche die Darmmitnahmeeinrichtung eingreifen kann. Nachteilig hierbei ist, dass es am Beginn und Ende eines jeweiligen Darmes aufgrund von Schlupf nicht immer zu einer vollständigen Abdrehung kommt, was wirtschaftlich von Nachteil und daher unerwünscht ist.

Andere bekannte Lösungen weisen am offenen Ende des Füllrohrs einen in eine Darmbremse integrierten angetriebenen Bremsring auf, der den Darm auf das Füllrohr drückt. Um zu gewährleisten, dass der Darm mit etwa derselben Geschwindigkeit wie das Füllrohr dreht, wird in bekannten Lösungen der Bremsring über eine separate Antriebseinheit in Drehung versetzt. Neben dem konstruktiven Aufwand ist bei solchen Lösungen nachteilig, dass die hierzu benötigten Bauteile einem großen Verschleiß ausgesetzt sind, da in üblichen Wurstproduktions-verfahren sehr hohe Taktfrequenzen benötigt werden, das heißt, dass sowohl das Füllrohr als auch der Bremsring innerhalb kürzester Zeit (im Millisekundenbereich) beschleunigt und wieder abgebremst werden. Als Folge dieser Verfahrensweisen müssen die betreffenden Bauteile wie Lager und Zahnräder häufig ausgetauscht werden, was nicht nur sehr kosten-, sondern auch zeitintensiv ist, da hierzu die Produktion unterbrochen werden muss. Aufgrund einer erhöhten Massenträgheit der zu beschleunigenden und zu verzögernden Bauteile der separaten Antriebseinheit, wird die Taktfrequenz nachteilig beeinflusst.

Der vorliegenden Erfindung liegt die Aufgabe zu Grunde, die Nachteile des Standes der Technik zu vermeiden und eine Füllvorrichtung, Füllmaschine und Verfahren zum Füllen von Hüllen, insbesondere Wurstdärmen bereitzustellen, die auf konstruktiv einfache Weise das sichere Abdrehen der Wurstportionen gewährleisten, insbesondere auch bei hohen Taktfrequenzen.

Diese Aufgabe wird erfindungsgemäß bei einer Füllvorrichtung, einer Maschine sowie bei einem Verfahren zum Füllen von Hüllen der eingangs genannten Art dadurch gelöst, dass das offene Ende des Füllrohrs so gestaltet ist, um mit dem Bremsring und dem Darm derart zusammenzuwirken, dass der Bremsring reib-und/oder formschlüssig mittels des Füllrohrs antreibbar und ein Drehmoment auf den Darm übertragbar ist.

Durch die erfindungsgemäße Gestaltung des Füllrohrs wird erreicht, dass sich der Darm am offenen Ende des Füllrohrs sicher mit dem Füllrohr dreht. Die Abdrehung der Wurstportionen, insbesondere der ersten und der letzten Portion wird gewährleistet, ohne dass der Bremsring über eine separate Antriebseinheit mit den oben beschriebenen Nachteilen angetrieben werden muss. Dadurch, dass durch die erfindungsgemäße Ausgestaltung des Füllrohrs und des Bremsrings die separate Antriebseinheit entfallen kann, reduziert sich die Anzahl der wegen Verschleiß auszutauschenden Bauteile. Somit können Stillstandszeiten wegen Austauscharbeiten sowie die Lagerhaltung entsprechender Bauteile verringert und die Maschine bzw. das Verfahren zum Füllen von Hüllen wirtschaftlicher betrieben werden.

Eine weitere Verbesserung der im Wesentlichen reib- und/oder formschlüssigen Drehmomentenübertragung vom Füllrohr auf den Darm und den Bremsring wird dadurch erreicht, dass die Mantelfläche des offenen Endes des Füllrohrs eine ebene oder aufgeraute Fläche oder längliche Vertiefungen mit V-förmigen oder gekrümmten Querschnitt aufweist. Diese Flächen oder Vertiefungen sind auf dem Teil der Mantelfläche des Füllrohrs vorzusehen, der mit dem Bremsring in Kontakt steht. Die Gestaltung des offenen Endes des Füllrohrs führt vorzugsweise nicht dazu, dass die Mantelfläche des Füllrohrs Öffnungen enthält.

Eine bevorzugte Ausführungsform der Erfindung zeichnet sich dadurch aus, dass der Bremsring frei drehbar gelagert ist und nicht angetrieben wird durch eine separate Antriebseinheit. Er ist vorzugsweise aus elastischem, leichten Material gefertigt und in leichtlaufenden Lagern, wie Wälzlagern, insbesondere Leichtlaufkugellagern, gelagert. Hierdurch wird das beim Beschleunigen zu überwindende Widerstandsmoment so klein wie möglich gehalten und die Bildung von Schlupf weitgehend vermieden.

Gemäß einer weiteren bevorzugten Ausführung besitzt der Bremsring eine Durchführungsöffnung zum Hindurchführen des Darms, welche einen runden oder mehreckigen Querschnitt aufweist und/oder an ihrer inneren Mantelfläche eine oder mehrere Vertiefungen beliebigen Querschnitts aufweist. Hierdurch wird die Reibung zwischen Bremsring, Darm und Füllrohr erhöht und die Drehmomentenübertragung bei konstantem Anpressdruck des Bremsrings auf das Füllrohr verbessert. Die axiale Verschiebbarkeit des Darms während des Befüllens bleibt so erhalten und die Wahrscheinlichkeit, den Darm während des Füllvorgangs zu beschädigen, ist gering.

Bei der erfindungsgemäßen Maschine zum Füllen von Hüllen, insbesondere von Wurstdärmen, die gemäß den zuvor beschriebenen Ausführungsformen ausgebildet ist, lassen sich im Wesentlichen die gleichen Vorteile erzielen wie mit der zuvor dargelegten Füllvorrichtung. Selbiges trifft auch für das erfindungsgemäße Verfahren zum Füllen von Hüllen, insbesondere von Wurstdärmen zu. Vorteilhafte Ausführungsformen sind in den Unteransprüchen angegeben und ergeben sich aus der nachfolgenden Beschreibung bevorzugter Ausführungsbeispiele, die anhand der Figuren näher erläutert sind.

Es zeigen:
- Fig. 1: eine Maschine zum Füllen von Hüllen mit einer erfindungsgemäßen Füllvorrichtung in einer Seitenansicht
- Fig. 2: eine Maschine zum Füllen von Hüllen mit einer erfindungsgemäßen Füllvorrichtung in einer Draufsicht
- Fig. 3: eine Schnittdarstellung der Darmbremse und des Füllrohrs
- Fig. 4: Schnittdarstellungen möglicher Ausführungsbeispiele des offenen Endes des Füllrohrs
- Fig. 5: eine weitere Schnittdarstellung des Wechselteils und des Füllrohrs

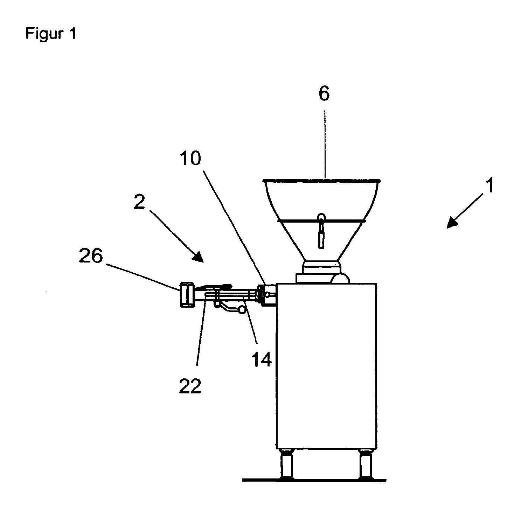

In Figur 1 ist eine Maschine 1 zum Füllen von Hüllen, insbesondere Wurstdärmen gezeigt, die mit einer erfindungsgemäßen Füllvorrichtung 2 ausgestattet ist. Ferner umfasst die Maschine 1 einen Vorratsbehälter in Form eines Fülltrichters 6, eine nicht dargestellte Fördereinrichtung zum Fördern von pastösen Massen, insbesondere Wurstbrät, Antriebe, Steuer- und Regelungseinheiten sowie Bedieneinrichtungen zum Bedienen von Maschine 1. Das im Vorratsbehälter 6 deponierte Wurstbrät wird mittels der Fördereinrichtung der Füllvorrichtung 2 zugeführt, mit deren Hilfe die zu füllende Hülle (nicht dargestellt) mit Wurstbrät oder anderen pastösen Massen gefüllt werden kann.

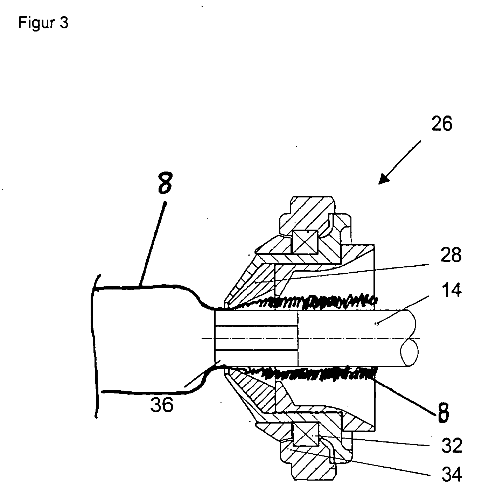

Die zu füllende Hülle, insbesondere ein Darm 8 ist auf einem hohlen Füllrohr 14 (Fig. 3) aufgezogen, das mit einem Abtriebgetriebe 10 in Drehung versetzt wird.

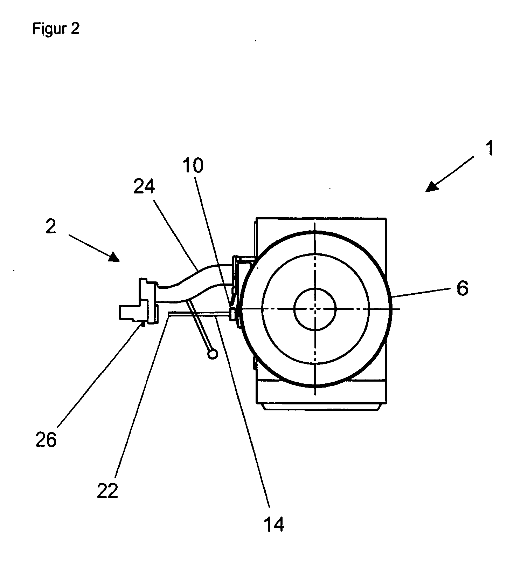

Des weiteren ist eine Darmbremse 26 zu sehen, die einen koaxial zur Drehachse des Füllrohrs 14 drehbar gelagerten Bremsring 28 (Fig. 3) aufweist. Durch das Zusammenwirken von Bremsring 28, Darm 8 und Füllrohr 14 wird erreicht, dass der Bremsring 28 mit Hilfe des Füllrohrs antreibbar ist und ein Drehmoment an einem offenen Ende 22 (Fig. 2) des Füllrohrs 14 auf den Darm 8 übertragen und der befüllte Darm 8 vor dem Füllrohr 14 abgedreht wird und so einzelne portionierte Würste entstehen.

In Figur 2 ist eine Draufsicht der Maschine 1 dargestellt, in der das Füllrohr 14 mit dem offenen Ende 22 zu sehen ist. Ferner ist ein Halterahmen 24 für die Lagerung der Darmbremse 26 eingezeichnet. Mit Hilfe der Fördereinrichtung kann Wurstbrät oder andere pastöse Masse durch das Füllrohr 14 strömen, das durch das offene Ende 22 des Füllrohrs 14 in den zu füllenden Darm (nicht dargestellt) gepresst wird. Der Halterahmen 24 ist drehbar gelagert, so dass die Darmbremse 26 z.B. zum Aufziehen eines neuen Darms 8 schnell und einfach vom Füllrohr 14 getrennt und anschließend wieder mit dem Füllrohr 14 verbunden werden kann.

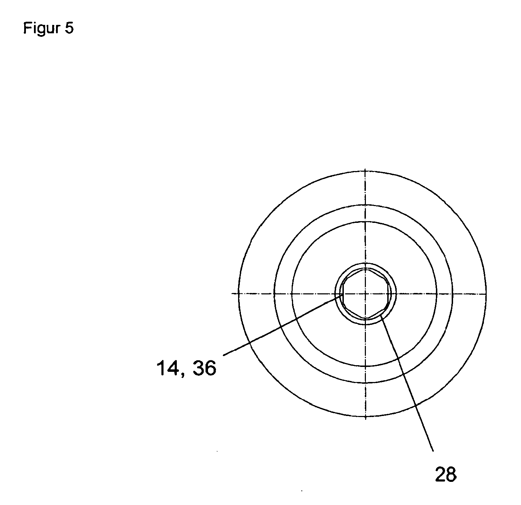

Die in Figur 3 detailliert dargestellte Darmbremse 26 weist einen Bremsring 28 auf, der mit einem Lager 32, welches als Wälzlager, insbesondere als Kugellager ausgestaltet ist, in einer Aufnahme 34 drehbar gelagert ist. Des weiteren sind Gestaltungsmerkmale 36 der Mantelfläche im Bereich des offenen Endes 22 des Füllrohrs 14 angedeutet (siehe auch Figur 5). Es ist ersichtlich, dass die Gestaltungsmerkmale 36 nur in einer solchen Länge ausgeführt werden müssen, dass der Bremsring 28 sicher mit ihnen und dem Darm 8 in Eingriff stehen kann. Der Bremsring 28 ist vorzugsweise aus leichtem elastischen Material und die Aufnahme 34 aus stabilem Edelstahl gefertigt. Durch die leichte Ausführung des Bremsrings 28 zusammen mit seiner Lagerung mit leichtgängigen Wälzlagern, insbesondere Kugellagern, wird erreicht, dass dieser leicht in Drehung versetzt werden kann und kein großes Widerstandsmoment überwunden werden muss. Hierdurch wird die Neigung zur Schlupfbildung minimiert.

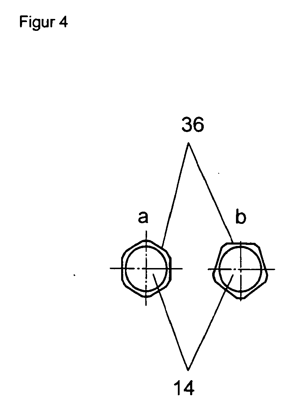

Figur 4 zeigt einige Ausführungsbeispiele des Gestaltungsmerkmals 36 des Füllrohrs 14. In Figur 4 a weist die Mantelfläche sechs ebene Flächen nach Art eines Sechskantes auf, wobei die Zwischenbereiche zwischen den ebenen Flächen wie dargestellt als ebene Flächen ausgebildet oder alternativ auch abgerundet sein können. In Figur 4 b sind fünf ebene Flächen vorgesehen. Sowohl in Figur 4 a als auch in Figur 4 b sind die Flächen so dimensioniert, dass sie nicht unmittelbar aneinander angrenzen, sondern zwischen ihnen ein Teil der runden Mantelfläche des Füllrohrs zurückbleibt. Die hier dargestellten Beispiele stellen nur einige Ausführungsmöglichkeiten der Gestaltungsmerkmale 36 dar und haben keine limitierenden Auswirkungen auf den beanspruchten Schutzumfang.

Figur 5 zeigt ein Ausführungsbeispiel, wie der Bremsring 28 mit dem offenen Ende 22 des Füllrohrs 14 zusammenwirken kann, so dass der Bremsring 28 mittels des Füllrohrs antreibbar ist. Die Gestaltungsmerkmale 36 sind in Figur 5 als sechs ebene Flächen ausgeführt. Der Bremsring 28 weist eine runde Durchführung für das Füllrohr auf.

Die Figuren 1 bis 5 veranschaulichen, dass die erfindungsgemäß gewählte Ausgestaltung des Bremsrings 28 und des offenen Endes 22 des Füllrohrs 14 eine Möglichkeit schafft, den Bremsring 28 mit Hilfe des Füllrohrs 14 und unter Zwischenschaltung des Darms 8 anzutreiben, ohne dass eine separate Antriebseinheit für den Bremsring 28 benötigt wird. Der konstruktive Aufwand wird durch die erfindungsgemäße Ausgestaltung des offenen Endes 22 des Füllrohrs 14 und des Bremsrings 28 gegenüber Ausführungsformen, bei denen der Bremsring 28 über eine separate Antriebseinheit angetrieben wird, deutlich reduziert. Durch den Wegfall der Antriebseinheit für den Bremsring 28 wird die Anzahl der benötigten Bauteile minimiert. Als unmittelbare Folge nimmt auch die Anzahl der von Verschleiß betroffenen Bauteile ab und entsprechend müssen auch weniger Teile ausgetauscht werden. Die Anzahl der zu lagernden Ersatzteile sowie die austauschbedingten Stillstandszeiten der erfindungsgemäß ausgestalteten Maschine und erfindungsgemäß betriebenen Verfahren werden deutlich verringert.

## Patentansprüche

1. Füllvorrichtung für eine Maschine zum Füllen von Hüllen, insbesondere Wurstdärmen, mit einem um seine Längsachse (12) dreh- und antreibbaren Füllrohr (14), auf das ein durch das Füllrohr (14) befüllbarer Darm (8) aufziehbar ist und mit einer am offenen Ende (22) des Füllrohrs (14) in einem Halterahmen (24) angeordneten Darmbremse (26), die einen Bremsring (28) aufweist, der mittels einer Aufnahme (34) und eines Lagers (32) koaxial zur Drehachse des Füllrohrs (14) drehbar gelagert ist,
**dadurch gekennzeichnet, dass** das offene Ende (22) des Füllrohrs (14) so gestaltet ist, um mit dem Bremsring (28) und dem Darm (8) derart zusammenzuwirken, dass der Bremsring (28) reib- und/oder formschlüssig mittels des Füllrohrs (14) antreibbar und ein Drehmoment auf den Darm (8) übertragbar ist.

2. Füllvorrichtung nach Anspruch 1,
**dadurch gekennzeichnet, dass** der Bremsring (28) frei drehbar gelagert ist und ausschließlich mittels des antreibbaren Füllrohrs antreibbar ist.

3. Füllvorrichtung nach Anspruch 1 oder 2,
**dadurch gekennzeichnet, dass** das Füllrohr (14) von seinem offenen Ende (22) ausgehend auf seiner äußeren Mantelfläche mindestens eine ebene Fläche (36) aufweist.

4. Füllvorrichtung nach Anspruch 1 oder 2,
**dadurch gekennzeichnet, dass** vom offenen Ende des Füllrohrs (14) ausgehend mindestens eine aufgeraute Fläche (36) vorgesehen ist.

5. Füllvorrichtung nach Anspruch 1 oder 2,
**dadurch gekennzeichnet, dass** das Füllrohr (14) von seinem offenen Ende (22) ausgehend mindestens eine auf seiner äußeren Mantelfläche verlaufende längliche Vertiefung (36) aufweist.

6. Füllvorrichtung nach Anspruch 5,
**dadurch gekennzeichnet, dass** die Vertiefung (36) einen im Wesentlichen V-förmigen Querschnitt aufweist.

7. Vorrichtung nach Anspruch 5,
**dadurch gekennzeichnet, dass** die Vertiefung (36) einen gekrümmten Querschnitt aufweist.

8. Füllvorrichtung nach einem der vorherigen Ansprüche,
**dadurch gekennzeichnet, dass** die Mantelfläche des Füllrohrs (14) keine Öffnungen aufweist.

9. Füllvorrichtung nach einem der vorherigen Ansprüche,
**dadurch gekennzeichnet, dass** das Lager (32) des Bremsrings (28) als Wälzlager, insbesondere als Kugellager, ausgeführt ist.

10. Füllvorrichtung nach einem der vorherigen Ansprüche,
**dadurch gekennzeichnet, dass** der Bremsring (28) eine Durchführungsöffnung zum Hindurchführen des Darms besitzt, welche einen runden oder mehreckigen Querschnitt aufweist und/oder an ihrer inneren Mantelfläche eine oder mehrere Vertiefungen beliebigen Querschnitts aufweist.

11. Maschine zum Füllen von Hüllen, insbesondere Wurstdärmen, mit einem um seine Längsachse (12) dreh- und antreibbaren Füllrohr (14), auf das ein durch das Füllrohr (14) befüllbarer Darm (8) aufziehbar ist und mit einer am offenen Ende (22) des Füllrohrs (14) in einem Halterahmen (24) angeordneten Darmbremse (26), die einen Bremsring (28) aufweist, der mittels einer Aufnahme (34) und eines Lagers (32) koaxial zur Drehachse des Füllrohrs (14) drehbar gelagert ist,
**dadurch gekennzeichnet, dass** das offene Ende (22) des Füllrohrs (14) so gestaltet ist, um mit dem Bremsring (28) und dem Darm (8) derart zusammenzuwirken, dass der Bremsring (28) reib- und/oder formschlüssig über das Füllrohr (14) antreibbar und ein Drehmoment auf den Darm (8) übertragbar ist.

12. Verfahren zum Füllen von Hüllen, insbesondere Wurst-Därmen, bei dem ein Darm (8) auf ein Füllrohr (14) aufgezogen wird, und mittels einer aus dem Füllrohr ausströmenden pastösen Masse, insbesondere Wurstbrät, gefüllt und von dem Füllrohr durch den Druck der Masse abgezogen wird,
und bei dem zur Portionierung des Darms durch Rotation des Füllrohres eine Abdrehstelle erzeugt wird, wobei der Darm mit einem drehbaren Bremsring (28) einer Darmbremse (26) zusammenwirkt,
**dadurch gekennzeichnet, dass** das Füllrohr (14) im Bereich des offenen Endes des Füllrohrs (14) so gestaltet ist, dass der Bremsring (28) reib- und/oder formschlüssig über das Füllrohr (14) angetrieben wird und ein Drehmoment auf den Darm (8) übertragen wird.

## Claims

1. A filling device for a machine for filling casings, in particular sausage casings, with a filling tube (14) which can be rotated and driven about its longitudinal axis (12), onto which tube a casing (8) which can be filled through the filling tube (14) can be pulled, and with a casing brake (26) arranged at the open end (22) of the filling tube (14) in a holding frame (24), which brake has a braking ring (28) which is rotatably mounted coaxially to the axis of rotation of the filling tube (14) by means of a receptacle (34) and a bearing (32),
**characterised in that** the open end (22) of the filling tube (14) is shaped so as to cooperate with the braking ring (28) and the casing (8) such that the braking ring (28) can be driven in a frictional and/or positive connection by means of the filling tube (14) and a torque can be transmitted to the casing (8).

2. A filling device according to Claim 1, **characterised in that** the braking ring (28) is mounted in freely rotatable manner and can be driven exclusively by means of the drivable filling tube.

3. A filling device according to Claim 1 or 2, **characterised in that** the filling tube (14) has at least one flat surface (36) starting from its open end (22) on its outer generated surface.

4. A filling device according to Claim 1 or 2, **characterised in that** at least one roughened surface (36) is provided starting from the open end of the filling tube (14).

5. A filling device according to Claim 1 or 2, **characterised in that** the filling tube (14) starting from its outer end (22) has at least one elongate recess (36) extending on its outer generated surface.

6. A filling device according to Claim 5, **characterised in that** the recess (36) has a substantially V-shaped cross-section.

7. A device according to Claim 5, **characterised in that** the recess (36) has a curved cross-section.

8. A filling device according to one of the preceding claims, **characterised in that** the generated surface of the filling tube (14) does not have any openings.

9. A filling device according to one of the preceding claims, **characterised in that** the bearing (32) of the braking ring (28) is in the form of a rolling bearing, in particular of a ball bearing.

10. A filling device according to one of the preceding claims, **characterised in that** the braking ring (28) has a passage opening for passing the casing through, which opening has a round or polygonal cross-section and/or has one or more recesses of any cross-section whatsoever on its inner generated surface.

11. A machine for filling casings, in particular sausage casings, with a filling tube (14) which can be rotated and driven about its longitudinal axis (12), onto which tube a casing (8) which can be filled through the filling tube (14) can be pulled, and with a casing brake (26) arranged at the open end (22) of the filling tube (14) in a holding frame (24), which brake has a braking ring (28) which is rotatably mounted coaxially to the axis of rotation of the filling tube (14) by means of a receptacle (34) and a bearing (32),
**characterised in that** the open end (22) of the filling tube (14) is shaped so as to cooperate with the braking ring (28) and the casing (8) such that the braking ring (28) can be driven in a frictional and/or positive connection by means of the filling tube (14) and a torque can be transmitted to the casing (8).

12. A method for filling casings, in particular sausage casings, in which a casing (8) is pulled on to a filling tube (14) and is filled by means of a pasty mass, in particular sausage meat, flowing out from the filling tube, and is removed from the filling tube by the pressure of the mass,
and in which in order to portion the casing a twist-off point is produced by rotating the filling tube, the casing cooperating with a rotatable braking ring (28) of a casing brake (26),
**characterised in that** the filling tube (14) in the region of the open end of the filling tube (14) is shaped such that the braking ring (28) is driven in a frictional and/or positive connection by means of the filling tube (14) and a torque is transmitted to the casing (8).

## Revendications

1. Dispositif de remplissage pour une machine destinée au remplissage d'enveloppes, notamment de boyaux de saucisses, comprenant un tube de remplissage (14) qui peut être mis en rotation et actionné autour de son axe longitudinal (12), sur lequel peut être enfilé un boyau (8) pouvant être rempli par le tube de remplissage (14) et comprenant un frein de boyau (26) situé dans un cadre de support (24) à l'extrémité ouverte (22) du tube de remplissage (14), lequel frein comprend une bague de freinage (28) qui est montée de manière rotative coaxialement à l'axe de rotation du tube de remplissage (14) au moyen d'un logement (34) et d'un palier (32),
**caractérisé par le fait que** l'extrémité ouverte (22) du tube de remplissage (14) est réalisée pour coopérer avec la bague de freinage (28) et le boyau (8) de manière à ce que la bague de freinage (28) puisse être entraînée par friction et/ou par conjugaison de forme au moyen du tube de remplissage (14) et à ce qu'un couple de rotation puisse être appliqué au boyau (8).

2. Dispositif de remplissage selon la revendication 1, **caractérisé par le fait que** la bague de freinage (28) est montée de manière à pouvoir tourner librement et ne peut être entraînée qu'au moyen du tube de remplissage actionnable.

3. Dispositif de remplissage selon la revendication 1 ou 2, **caractérisé par le fait que** le tube de remplissage (14) comprend au moins une surface lisse (36) sur sa surface périphérique extérieure en partant de son extrémité ouverte (22).

4. Dispositif de remplissage selon la revendication 1 ou 2, **caractérisé par le fait qu'**au moins une surface rugueuse (38) est prévue en partant de l'extrémité ouverte du tube de remplissage (14).

5. Dispositif de remplissage selon la revendication 1 ou 2, **caractérisé par le fait que** le tube de remplissage (14) est pourvu d'au moins une cavité allongée (36) sur sa surface périphérique extérieure en partant de son extrémité ouverte (22).

6. Dispositif de remplissage selon la revendication 5, **caractérisé par le fait que** la cavité (36) a une section transversale essentiellement en forme de V.

7. Dispositif selon la revendication 5, **caractérisé par le fait que** la cavité (36) a une section transversale courbe.

8. Dispositif selon l'une des revendications précédentes, **caractérisé par le fait que** la surface périphérique du tube de remplissage (14) est dépourvue d'ouvertures.

9. Dispositif de remplissage selon l'une des revendications précédentes, **caractérisé par le fait que** le palier (32) de la bague de freinage (28) est exécutée en tant que palier à roulement, plus particulièrement en tant que roulement à billes.

10. Dispositif de remplissage selon l'une des revendications précédentes, **caractérisé par le fait que** la bague de freinage (28) comporte une ouverture de passage pour la traversée du boyau qui a une section transversale ronde ou polygonale et/ou est pourvue d'une ou plusieurs cavités de section transversale quelconque sur sa surface périphérique intérieure.

11. Machine de remplissage d'enveloppes, notamment de boyaux de saucisses, comprenant un tube de remplissage (14) qui peut être mis en rotation et actionné autour de son axe longitudinal (12), sur lequel peut être enfilé un boyau (8) pouvant être rempli par le tube de remplissage (14) et comprenant un frein de boyau (26) situé dans un cadre de support (24) à l'extrémité ouverte (22) du tube de remplissage (14), lequel frein comprend une bague de freinage (28) qui est montée de manière rotative coaxialement à l'axe de rotation du tube de remplissage (14) au moyen d'un logement (34) et d'un palier (32),
**caractérisée par le fait que** l'extrémité ouverte (22) du tube de remplissage (14) est réalisée pour coopérer avec la bague de freinage (28) et le boyau (8) de manière à ce que la bague de freinage (28) puisse être entraînée, par friction et/ou par conjugaison de forme, par le biais du tube de remplissage (14) et à ce qu'un couple de rotation puisse être appliqué au boyau (8).

12. Procédé de remplissage d'enveloppes, notamment de boyaux de saucisses, dans lequel un boyau (8) est enfilé sur un tube de remplissage (14), est rempli au moyen d'une masse pâteuse, notamment une farce pour saucisse, sortant du tube de remplissage et est retiré du tube de remplissage sous l'effet de la pression de la masse,
et dans lequel un emplacement de séparation par torsion est produit par rotation du tube de remplissage, afin de diviser le boyau en portions, le boyau coopérant avec une bague de freinage (28) rotative d'un frein de boyau (26),
**caractérisé par le fait que** le tube de remplissage (14) est réalisé, dans la zone de l'extrémité ouverte du tube de remplissage (14), de manière à ce que la bague de freinage (28) soit entraîné, par friction et/ou par conjugaison de forme, par le biais du tube de remplissage (14) et à ce qu'un couple de rotation soit appliqué au boyau (8).
